# EUROPEAN PATENT APPLICATION

(11) **EP 3 174 270 A1**
(43) Date of publication of application: **31.05.2017**
(21) Application number: 15306888.7
(22) Date of filing: 27.11.2015
(51) Int. Cl.: H04M 1/2745, H04M 1/57

(54) **AUTOMATIC GROUPING OF CONTACTS AND JOINED GRAPHICAL CALL INDICATION**

(71) Applicant: Thomson Licensing, 92130 Issy-les-Moulineaux (FR)
(72) Inventor: BORSUM, Malte, 30655 Hannover (DE)
(74) Representative: Huchet, Anne

(57) **Abstract**

A method, a computer readable storage medium and an apparatus (2) for visually representing contact information are described. Contact information of several people are received (201), each of which includes multiple attributes. Identical attributes among the contact information of the several people are detected (202). A visual representation for the contact information of the several people is generated (203). The contact information of the respective people with the identical attributes are represented jointly in the visual representation.

## Description

### TECHNICAL FIELD

The present disclosure relates to a method and an apparatus for visually representing contact information. Furthermore, a computer readable storage medium for such a method and an apparatus is also disclosed.

### BACKGROUND

In user communication, there are several instances where communication partners are visualized for easier identification. Examples are caller images on cellular phones or in email clients. When a call is arriving, the calling number, which is communicated by the service provider, is applied to find an entry or data set in the user's address book. This entry further comprises an image, icon or another graphical representation of the person assigned to this entry. This image is used for visualization of the incoming call, i.e. it appears on the display when the respective person is calling.

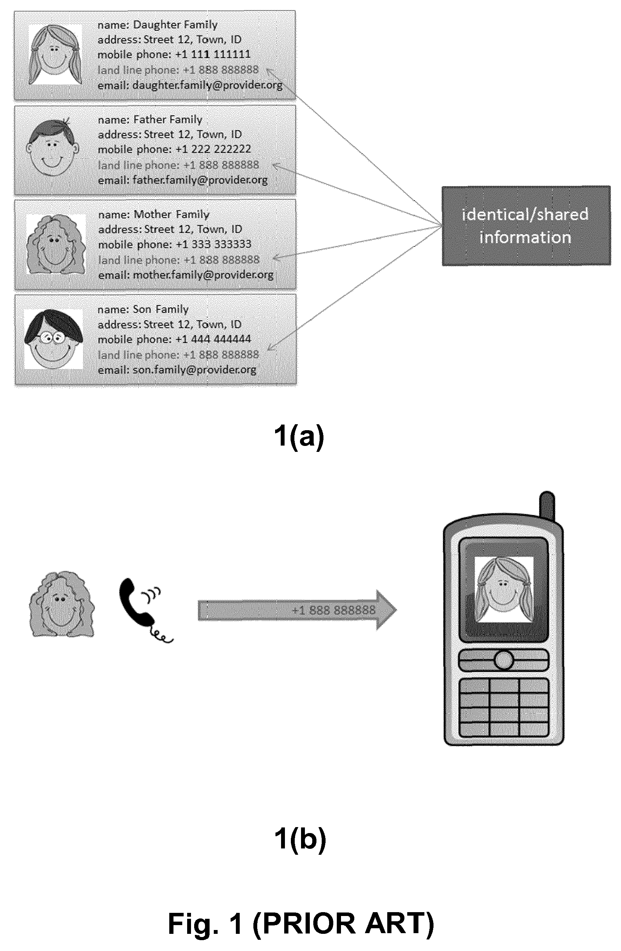

However, in most personal address books family members or members of a group of persons have individual, which means different, entries or datasets. For example, in an assumed typical family with father, mother, son and daughter, there are four entries for this particular family in the address book of the user, as shown in Fig. 1(a). The entries are separated and distinct, as each person has for example a unique mobile number and email address. However, all family members share the same landline phone number, which is used by all family members. If now one of these persons is calling from that shared phone, an arbitrary entry is found in the address book of the called person. Often, this will be the alphabetically first entry or even the first entry in the personal address book. Hence, it is very likely that wrong information will be visualized. For example, as shown in Fig. 1(b), it is the family's mother who is calling. However, because the daughter's entry is the first in the address book, the daughter's image is displayed on the cellular phone although it is the mother who is calling.

### SUMMARY

Therefore, it is an object to provide an improved solution for visually representing contact information and to provide a computer readable storage medium having stored therein instructions for visually representing contact information, wherein the assignment between the visual representation and contact information shall be more reliable.

The object is solved by a method for visually representing contact information, comprising: receiving contact information of several people, the contact information of each person including multiple attributes; detecting at least one identical attributes among the contact information of the several people; and generating a visual representation for the contact information of the several people, wherein the contact information with the at least one identical attribute are represented jointly in the visual representation.

The method in particular further comprises the step of displaying the visual representation.

Advantageously, the visual representation matches the true situation, which is behind the contact information. When contact information of several people share identical attributes or characters, for example because these people are using the identical land line telephone number or the same email address, the visual representation reflects this situation. There is a merged visual representation providing the user with intuitive information about the sender of the message or the calling person. A merged visual representation is generated and displayed instead of displaying an arbitrary single one.

According to an advantageous embodiment, the method further comprises generating a list of matching contacts consisting of the detected contact information having identical attributes or characters. The visual representation is a composed image comprising, for each matching contact in the list, an image assigned to the respective contact.

According to this embodiment, also the number of results, which means the number of contact information sharing the identical attribute, is reflected upon generation of the composed image. The visualization is for example an NxM pattern that fits the number of results as close as possible. Advantageously, N and M should be similar or equal in size to get a visually appealing result. If a perfect pattern is possible, for example for four, six or nine contacts to be displayed (these can be arranged in a 2x2, 2x3 and 3x3 pattern of images), this is preferably performed.

In other words, the method is further enhanced in that it comprises selecting a composite image format for the visual representation of the contact information of the several people, based on a number of matches in the list.

To enhance the joint visual representation, the method advantageously further comprises cropping the images forming part of the composite image such that the cropped images fit in the selected composite image format.

Furthermore, instead of simply cropping the images from all sides, face recognition can be performed in order to preserve the core features of the images. In other words, the images are cropped in that the main characteristics of the image are preserved. For example, the eyes, nose and mouth will not be cut off.

In order to get a more homogeneous visualization, one embodiment of the method can advantageously further comprise the step of harmonizing/homogenizing of image content assigned to contact information having identical attributes for the joint visual representation.

Various image parameters of the individual images can be harmonized. For example, the size of the face or the eye distance can be adapted by zooming. The background color can be replaced or blended or the brightness level and color saturation can be leveled out. This can result in a homogeneous merged and improved image.

Furthermore, the method is advantageously enhanced in that it further comprises selecting a group contact information being a representative of all the contact information of the several people having identical attributes/characters. The group contact information comprises the identical attributes/characters. The visual representation of contact information of the several people having at least one identical attribute/character is defined by image information in the group contact information.

In case the user defines extra entries for shared information, it is possible to put the user defined individual visualization images into that entry. As the shared information shall also be presented at the individual entries, the shared entry has to be marked as a special or priority entry. A search will therefore match with this entry instead of the first or an arbitrary result. If this is applied, the visual representation in this priority entry can be taken from the group contact information. A merged image can be generated as mentioned before.

Furthermore, if not all contact information of all people have an image, a generic place holder image can be taken for this particular contact information. This can be performed if only contact information of one person does not comprise an image or even if all contact information do not have images. It is also possible to take a capital letter of the first or last name, initials, part of the same or a similar representation for describing the user. The same applies to a certain color, which can be assigned to the respective individual.

The object is also solved by an apparatus for visually representing contact information, comprising a reception unit and an operation unit. The reception unit is configured to receive contact information of several people, each contact information including multiple attributes. The operation unit is configured to detect at least one identical attributes among the contact information of the several people, and to generate a visual representation for the contact information of the several people, wherein the contact information with the at least one identical attribute is represented jointly in the visual representation.

The apparatus in particular further comprises a display for displaying the visual representation.

In one embodiment, the operation unit is further configured to generate a list of matching contacts and a visual representation. The list of matching contacts consists of the detected contact information having identical attributes or characters. The visual representation is a composed image comprising, for each matching contact in the list, an image assigned to the respective contact.

Advantageously, the operation unit is further configured to select a composite image format for the visual representation of the contact information of the several people, based on a number of matches in the list.

The apparatus can also be enhanced such that the operation unit is further configured to crop the images forming part of the composite image, where the cropped images fit in the selected composite image format.

In an advantageous embodiment, the operation unit is further configured to harmonize or homogenize image content assigned to contact information having identical attributes or characters for the joint visual representation.

In one embodiment, the operation unit is further configured to select a group contact information being a representative of all the contact information of the several people having identical attributes/characters. The group contact information comprises the identical attributes/characters. The visual representation of contact information of the several people has at least one identical attribute/character is defined by image information in the group contact information.

Same or similar advantages and aspects, which have been mentioned with respect to the method according to the current principles, apply to the apparatus for visually representing contact information in the same or similar way.

Also, a computer readable storage medium having stored therein instructions for visually representing contact information, which when executed by a computer, causes the computer to: receive contact information of several people, the contact information including multiple attributes; detect at least one identical attributes among the contact information of the several people; and generate a visual representation for the contact information of the several people, wherein the contact information with the at least one identical attribute is represented jointly in the visual representation.

The computer readable storage medium is further enhanced in that it additionally comprises instructions, which when executed by a computer, causes the computer to generate a list of matching contacts consisting of the detected contact information having identical attributes/characters, wherein the visual representation is a composed image comprising, for each matching contact in the list, an image assigned the respective contact.

In an advantageous embodiment, there are further instructions, which when executed by a computer, cause the computer to select a composite image format for the visual representation of the contact information of the several people, based on a number of matches in the list.

Advantageously, the computer readable storage medium further comprises instructions, which when executed by a computer, cause the computer to crop the images forming part of the composite image in that the cropped images fit in the selected composite image format.

According to an advantageous embodiment, the computer readable storage medium comprises instructions, which when executed by a computer, cause the computer to harmonize or homogenize image content assigned to contact information having identical attributes for the joint visual representation.

In still another advantageous embodiment, the computer readable storage medium comprises instructions, which when executed by a computer, cause the computer to generate a group contact information being a representative of all the contact information of the several people having identical attributes/characters, the group contact information comprising the identical attributes/characters, wherein the visual representation of contact information of the several people having at least one identical attribute/character is defined by image information in the group contact information.

Same or similar advantages and aspects, which have been mentioned with respect to the method according to aspects of the invention, also apply to the computer readable storage medium in the same or similar way and are therefore not repeated.

Further characteristics of the current principles will become apparent from the description of the embodiments according to the invention together with the claims and the included drawings. Embodiments can fulfill individual characteristics or a combination of several characteristics.

### BRIEF DESCRIPTION OF THE DRAWINGS

For a better understanding of the present principles, the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims and exhibited in the figures.
- Fig. 1: is a simplified and schematic illustration of a situation, in which the visual representation and the contact information are mismatching, according to the prior art.
- Fig. 2: shows a simplified and schematic apparatus for visually representing contact information according to the present principles.
- Fig. 3: is a schematic diagram depicting one embodiment of an apparatus for generating a combined visual contact representation introduced in the present principles.
- Fig. 4: shows exemplary patterns for the visual representation of contact information in one embodiment of a method for visually representing contact information according to the present principles.
- Fig. 5: shows exemplary cropping of an image in one embodiment of a method for visually representing contact information according to the present principles.
- Fig. 6: is a flow chart schematically illustrating an embodiment of a method for generating a combined visual contact representation.

In the drawings, the same or similar types of elements or respectively corresponding parts are provided with the same reference numbers in order to prevent the item from needing to be reintroduced.

### DETAILED DESCRIPTION OF PREFERRED EMBODIMENTS

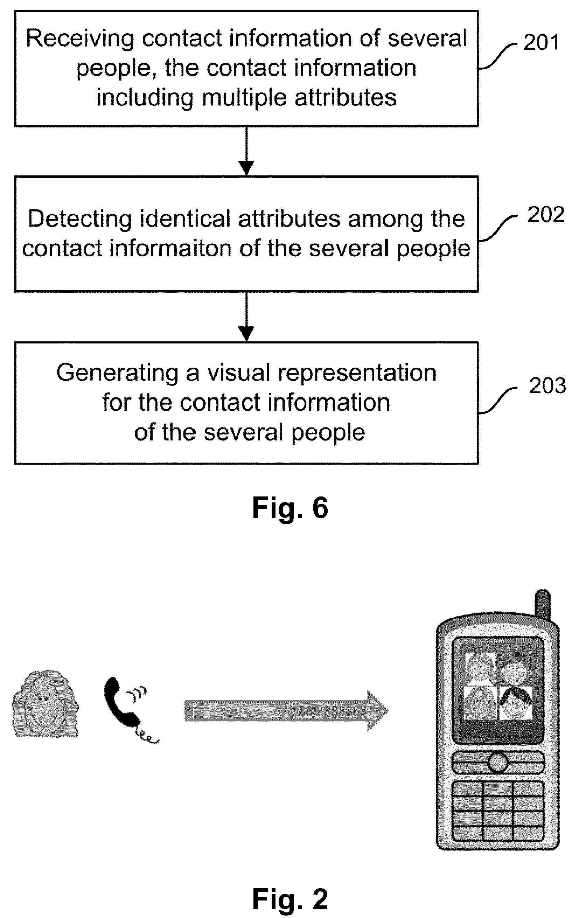

As shown in Fig. 6, an embodiment for the method of visually representing contact information is schematically illustrated. The method comprises receiving 201 contact information of several people. The contact information of each person includes multiple attributes. The method further comprises detecting 202 at least one identical attribute among the contact information of the several people, and generating 203 a visual representation for the contact information of the several people, wherein the contact information of the respective person with the at least one identical attribute are represented jointly in the visual representation. Referring to Fig. 1(a), one embodiment of the method for visually representing contact information according to the present principles is explained as following in detail. Each family member, who are by way of an example daughter, father, mother and son, has its own and individual cell phone number and email address. All family members, in contrast, share the same landline phone number. The name, address, cell phone number, land line number and email address represent attributes or characters of the contact information of the family members. The landline phone number represents an identical attribute or character of the contact information of the family members.

The identical attribute or character can be detected by an apparatus 2, which for example can be a cell phone or a tablet, for visually representing contact information of the people. Fig. 2 shows an exemplary embodiment of the apparatus 2, where contact information of the family for example resides in the address book of this device. A visual representation for the contact information of the family members is generated in the apparatus 2. By way of an example, the mother is calling using the landline phone number, therefore the land line telephone number is the search criteria to detect identical attributes. The apparatus 2 displays a joint visual representation of the family members. By way of an example, the four images forming part of the contact information as illustrated in Fig. 1 are merged to a 2x2 pattern and are displayed on the display of the cell phone.

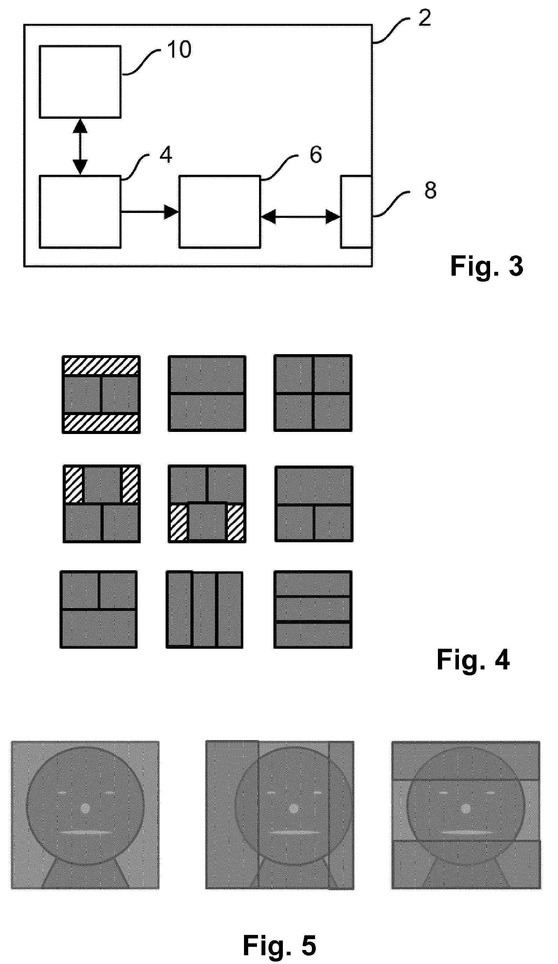

Referring to Fig. 3, one embodiment of an apparatus 2 for visually representing contact information according to the present principles is illustrated. The apparatus 2 is for example, a computer, a cell phone, a tablet or the like. The apparatus 2 comprises a reception unit 4 and an operation unit 6. The reception unit 4 is configured to receive contact information of several people. The contact information of each person includes multiple attributes or characters. The reception unit 4 is coupled to a data-base 10, which for example stores the contact information of the several people. Furthermore, the apparatus 2 comprises an operation unit 6, which is for example a processor or central processing unit (CPU) and is configured to search and detect identical attributes among the contact information of the several people. The operation unit 6 is further configured to generate a visual representation for the contact information of the several people. Contact information having at least one attribute or character in common with the search criteria are represented jointly in the visual representation on a display device 8 of the apparatus 2.

In one embodiment, the display device 8 can be, for example, a touch screen and thus has multiple functions. A user can use the display device 8 as a user interface device as well to enter input or instruction to the apparatus 2 for displaying or retrieving the contact information. In other words, the display device 8 can serve as a display device and also a user interface device.

In particular, the operation unit 6 includes a search module which returns a list with all matching entries having at least one attribute in common. These are for example, the four family members shown in Fig. 1(a). Furthermore, the number of results in this list can be calculated. Subsequently, a visualization module, which can also be implemented in the operation unit 6, takes the number of results to find an appropriate NxM pattern that fits the result number as close as possible. N and M should be similar or equal in size to get a visually appealing result. When making reference to the example of the family, this is the 2x2 pattern shown on the display of the cell phone in Fig. 2.

More examples of the NxM patterns are illustrated in Fig. 4. There are simplified patch configuration samples for visually representing contact information. The non-hedged areas can be filled with image content while the hedged areas can be left avoid. Examples for two and three images to be displayed jointly are given.

According to further embodiments according to current principles, one of the fields for further visualization can be skipped and in the row or column with the skipped field the remaining fields can be realigned. Furthermore, one row or column can be adapted to hold less or more fields than the others. For each of the fields of the selected pattern, one image from the search result list can be inserted by for example down scaling and rerendering. If the number of fields in the row or column was adapted, the image can be also cropped or scaled with an adapted aspect ratio.

Instead of simply cropping the images from all sides, face recognition, can be performed and cropping can be performed while preserving the core features of the image. These are for example the eyes, nose and mouth of a person, which are as shown in Fig. 5. On the left, there is a schematic simplified image of a person. Using face recognition, the person's eyes, nose and mouth have been identified. Hence, in the two images shown to the right, the image can be cropped asymmetrically from both sides or from bottom and top, wherein the main features of the person's face are preserved.

In order to provide a more homogeneous visualization, some image parameters of the individual images can be harmonized. The size of the face or the eye distance can be adapted for example by zooming. Furthermore, the background color can be replaced or blended; the brightness level or the color saturation level can be leveled out. As the final result, the combined image pattern appears more homogeneous and it will be displayed to the user instead of an arbitrary single image.

According to a further embodiment, the user can define an extra entry for shared information. For example, a user defined completely individual visualization image can be put into the extra entry. As the shared information shall be present at the individual entries also, the shared entry has to be marked as a special/priority entry. The search module of the apparatus 2, which for example is integrated in or combined with the operation unit 6, finds all matching entries instead of only the first or an arbitrary one. In case multiple entries are found, the entry with the priority flag is selected and used for visualization. Hence, not the list but the single priority entry is returned. This entry then defines the visualization of the contact information.

Furthermore, it can happen that some of the entries/contact information that are found and should be visualized does not comprise an image. Hence, a generic place holder image can be taken. This can be a schematic person or a pictogram. Furthermore, a capital letter of the first name, a capital letter of the last name, initials, part of the name, the first name, the last name or the full name can be applied. If available, also a color or a color based on some metadata, for example a color selection by gender, can be applied. As an attribute/character of the contact information also the last name of the entries can be applied. For example some entries, like the family depicted in Fig. 1(a), have the same last name, and they can be visualized together. This can be performed by visualizing for example "father & mother name" or "father + mother name" or "father, mother name".

All named characteristics, including those taken from the drawings alone, and individual characteristics, which are disclosed in combination with other characteristics, are considered alone and in combination as important to the current principles. Embodiments according to the invention can be fulfilled through individual characteristics or a combination of several characteristics. Features which are combined with the wording "in particular" or "especially" are to be treated as preferred embodiments.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

## Claims

1. A method for visually representing contact information, comprising:
receiving (201) contact information of several people, the contact information of each person including multiple attributes;
detecting (202) at least one identical attribute among the contact information of the several people; and
generating (203) a visual representation for the contact information of the several people, wherein the contact information of the respective person with the at least one identical attribute are represented jointly in the visual representation.

2. The method of claim 1, further comprising generating a list of matching contact information consisting of the detected contact information having identical attributes, wherein the visual representation is a composed image comprising, for each matching contact information in the list, an image assigned to the respective contact information.

3. The method of claim 2, further comprising selecting a composite image format for the visual representation of the contact information of the several people, based on a number of matches in the list.

4. The method of claim 3, further comprising cropping the images forming part of the composite image such that the cropped images fit in the selected composite image format.

5. The method of one of the preceding claims, further comprising harmonizing or homogenizing of image content assigned to the respective contact information having identical attributes for the joint visual representation.

6. The method of one of claims 2 to 5, wherein at least one of the image of the respective contact information is represented by a generic place holder image.

7. The method of one of the preceding claims, further comprising selecting a group contact information being a representative of all the contact information of the several people having identical attributes, the group contact information comprising the identical attributes, wherein the visual representation of the contact information of the several people having at least one identical attribute is defined by image information in the group contact information, and wherein one of the identical attributes among the contact information of the several people is associated with a priority flag and defines the visualization of the contact information.

8. An apparatus (2) for visually representing contact information, comprising:
a reception unit (4) configured to receive contact information of several people, the contact information of each person including multiple attributes/characters; and
an operation unit (6) configured to
detect at least one identical attribute among the contact information of the several people; and
generate a visual representation for the contact information of the several people, wherein the contact information of the respective person with the at least one identical attribute is represented jointly in the visual representation.

9. The apparatus (2) of claim 8, wherein the operation unit (6) is further configured to generate a list of matching contact information consisting of the detected contact information having identical attributes, and generate the visual representation in that it is a composed image comprising, for each matching contact information in the list, an image assigned to the respective contact information.

10. The apparatus of claim 9, wherein the operation unit (6) is further configured to select a composite image format for the visual representation of the contact information of the several people, based on a number of matches in the list.

11. The apparatus of claim 10, wherein the operation unit (6) is further configured to crop the images forming part of the composite image such that the cropped images fit in the selected composite image format.

12. The apparatus of one of claims 8 to 11, wherein the operation unit (6) is further configured to harmonize or homogenize image content assigned to the respective contact information having identical attributes for the joint visual representation.

13. The apparatus of one of claims 9 to 12, wherein at least one of the image of the respective contact information is represented by a generic place holder image

14. The apparatus of anyone of claims 8 to 13, wherein the operation unit (6) is further configured to select a group contact information being a representative of all the contact information of the several people having identical attributes, the group contact information comprising the identical attributes, wherein the visual representation of contact information of the several people having at least one identical attribute/character is defined by image information in the group contact information, and wherein one of the identical attributes among the contact information of the several people is associated with a priority flag and defines the visualization of the contact information.

15. A computer readable storage medium having stored therein instructions for visually representing contact information, which when executed by a computer, causes the computer to:
receive contact information of several people, the contact information of each person including multiple attributes;
detect at least on identical attribute among the contact information of the several people; and
generate a visual representation for the contact information of the several people, wherein the contact information of the respective person with the at least one identical attribute is represented jointly in the visual representation.
